# EUROPÄISCHE PATENTSCHRIFT

(11) **EP 1 535 687 B1**
(45) Veröffentlichungstag und Bekanntmachung des Hinweises auf die Patenterteilung: **21.07.2010**
(21) Anmeldenummer: 04105469.3
(22) Anmeldetag: 03.11.2004
(51) Int. Cl.: B23H 7/26, B23H 7/30

(54) **Vorrichtung und Verfahren zum Erodieren**
Electro-erosion method and apparatus
Méthode et appareil pour usinage par érosion.

(30) Priorität: 29.11.2003 DE 10355908
(43) Veröffentlichungstag der Anmeldung: 01.06.2005
(73) Patentinhaber: ROBERT BOSCH GMBH, 70442 Stuttgart (DE)
(72) Erfinder: Alt, Erhard, 96117, Memmelsdorf (DE); Hohmann, Eugen, 96191, Viereth-Trunstadt (DE); Dieterle, Martin, 71636, Ludwigsburg (DE)

(56) Entgegenhaltungen:
- US-A- 3 758 739
- PATENT ABSTRACTS OF JAPAN Bd. 006, Nr. 029 (M-113), 20. Februar 1982 (1982-02-20) & JP 56 146627 A (MITSUBISHI ELECTRIC CORP), 14. November 1981 (1981-11-14)
- PATENT ABSTRACTS OF JAPAN Bd. 015, Nr. 215 (M-1119), 31. Mai 1991 (1991-05-31) & JP 03 060928 A (SODICK CO LTD; others: 01), 15. März 1991 (1991-03-15)
- PATENT ABSTRACTS OF JAPAN Bd. 017, Nr. 172 (M-1392), 2. April 1993 (1993-04-02) & JP 04 331026 A (FANUC LTD), 18. November 1992 (1992-11-18)

## Beschreibung

### Stand der Technik

Das sogenannte Senkerodieren ist seit langem bekannt. Es wird unter anderem auch dazu eingesetzt in Injektoren oder Einspritzvorrichtungen von Kraftstoffeinspritzsystemen kleinste Bohrungen, wie beispielsweise die Spritzlöcher, mit hoher Präzision herzustellen.

Bei einer herkömmlichen Erodiermaschine wird der Vorschub der Elektrode in der Regel durch eine Kugelgewindespindel und einem mit dieser Kugelgewindespindel verbundenen Gleichstrommotor realisiert. Angesteuert wird der Gleichstrommotor durch ein Steuer- und Regelgerät. Die solcherart erzeugte Vorschubbewegung ist für manche Zwecke nicht ausreichend genau steuerbar.

Aus der US 3,758,739 welche als nächstliegender Stand der Technik anzusehen ist, und der JP 04 331026 A sind Erodiervorrichtungen bekannt, die über einen Hauptantrieb und einen Feinantrieb verfügen. Beide Antriebe werden simultan angeseteuert, so dass sich die Ungenauigkeiten beider Antriebe addieren können.

Der Erfindung liegt die Aufgabe zugrunde, eine Vorrichtung zum Erodieren und ein Verfahren zum Erodieren bereitzustellen, mit deren Hilfe die Herstellung kleinster Löcher, Vertiefungen und anderer Ausnehmungen mit sehr großer Präzision und auf sehr wirtschaftliche Weise möglich ist.

Diese Aufgabe wird erfindungsgemäß durch eine Vorrichtung mit den Merkmalen des Anspruchs 1 und ein Verfahren mit den Merkmalen des Anspruchs 7.

### Vorteile der Erfindung

Durch die erfindungsgemäße Vorrichtung wird die Vorschubbewegung der Elektrode durch zwei Antriebe, nämlich einen Hauptantrieb und einen Feinantrieb, bewerkstelligt. Dadurch können große Verfahrwege, beispielsweise wenn die Elektrode in die Nähe des Werkstücks verfahren werden soll, rasch und mit an sich bekannter Technik durchgeführt werden. Andererseits kann die Vorschubbewegung während des Erodierens mit dem Feinantrieb durchgeführt werden und zwar mit der geforderten Präzision und einer guten Steuerbarkeit.

Um die Präzision der erodierten Bohrungen oder Ausnehmungen weiter zu verbessern ist zwischen Antrieb und Elektrodenhalter eine schaltbare Kupplung, insbesondere eine schaltbare Magnetkupplung, vorgesehen, so dass der Hauptantrieb von der Elektrode abgekoppelt werden kann, wenn er nicht benötigt wird. Dadurch kann der Erodierprozess genauer gesteuert werden, so dass im Ergebnis die Qualität der erodierten Bohrungen gesteigert wird.
Es hat sich bewährt, wenn der Hauptantrieb ein vorgespanntes Kugelgewinde aufweist, so dass dieser aus dem Stand der Technik bekannte Spindelantrieb für die großen Vorschubbewegungen der Elektrode bei einer erfindungsgemäßen Vorrichtung nutzbringend eingesetzt werden kann.
Bei einer weiteren Variante der erfindungsgemäßen Vorrichtung weist der Feinantrieb einen Piezoaktor auf. Durch den Einsatz eines Piezoaktors können kleinste Vorschubbewegungen mit einer sehr hohen Präzision gesteuert werden, so dass die gewünschte Verbesserung der Qualität der erodierten Werkstücke erreicht wird.

Es hat sich weiter als vorteilhaft erwiesen, wenn der Feinantrieb eine Leistungsendstufe und einen digitalen Signalprozessor aufweist. Mit diesen Baugruppen ist es möglich, den Piezoaktor anzusteuern.

Um einen optimalen Erodierprozess zu gewährleisten ist erfindungsgemäß vorgesehen, dass ein Steuer- und Regelgerät für den Hauptantrieb und den Feinantrieb vorhanden ist, und dass das Steuer- und Regelgerät den Vorschub der Elektrode in Abhängigkeit der Entladespannung und/oder des Entladestroms zwischen einem zu bearbeitenden Werkstück und einem Impulsgenerator der Vorrichtung zum Erodieren regelt.

Die Präzision des Erodiervorgangs wird weiter verbessert, wenn eine schaltbare Arretiereinrichtung für den Hauptantrieb vorhanden ist, so dass bei aktiviertem Feinantrieb der Hauptantrieb arretiert werden kann und somit die Genauigkeit der Vorschubbewegung weiter verbessert wird.

Es hat sich weiter als vorteilhaft erwiesen, wenn die Vorschubbewegung während des Erodiervorgangs in Abhängigkeit der Entladespannung und/oder des Entladestroms zwischen einem zu bearbeitenden Werkstück und einem Impulsgenerator geregelt wird.

Es hat sich ferner als vorteilhaft erwiesen, wenn der Hauptantrieb nach dem Abschalten durch eine Arretiervorrichtung fixiert wird.

Nach Beendigung eines Erodiervorgangs ist erfindungsgemäß vorgesehen, dass die Arretiervorrichtung gelöst wird, die schaltbare Kupplung geschlossen wird, und dass sowohl Hauptantrieb als auch Feinantrieb in ihre Ausgangspositionen gebracht werden. Dadurch ist ein Verfahrenszyklus abgeschlossen und es kann die Bearbeitung eines weiteren Werkstücks erfolgen.

Weitere Vorteile und vorteilhafte Ausgestaltungen der Erfindung können der nachfolgenden Zeichnung, deren Beschreibung und den Patentansprüchen entnommen werden.

Alle in der Zeichnung, deren Beschreibung und den Patentansprüchen offenbarten Merkmale können sowohl einzeln als auch in beliebiger Kombination miteinander erfindungswesentlich sein.

### Zeichnungen

- Figur 1: eine Prinzipskizze einer erfindungsgemäßen Vorrichtung zum Erodieren,
- Figur 2: ein Ausschnitt eines ersten Ausführungsbeispiels einer erfindungsgemäßen Vorrichtung zum Erodieren,
- Figur 3: ein Ausschnitt eines zweiten Ausführungsbeispiels einer erfindungsgemäßen Vorrichtung zum Erodieren,
- Figur 4: ein Blockschaltbild der Ansteuerung des Feinantriebs, und
- Figur 5: ein Ablaufdiagramm eines Ausführungsbeispiels eines erfindungsgemäßen Verfahrens.

### Beschreibung der Ausführungsbeispiele

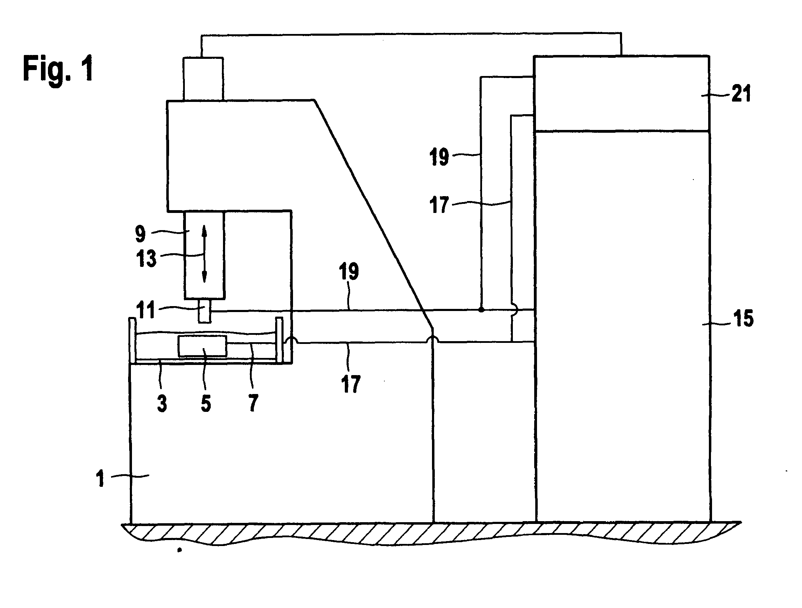

In Figur 1 ist eine erfindungsgemäße Senkerosionsanlage stark vereinfacht dargestellt. Die Senkerosionsanlage besteht aus einem Maschinenständer 1 mit einer Werkstückaufnahme 3, in der ein Werkstück 5 fixiert ist. Das Werkstück 5 ist, wie bei anderen Erodiermaschinen auch, von einem Dielektrikum 7 umgeben.

Am oberen Teil des Maschinenständers 1 ist ein Elektrodenhalter 9 angeordnet, an dem eine Elektrode 11 aufgenommen ist. Mit Hilfe eines nicht dargestellten Antriebs kann die Elektrode 11 in Richtung des Doppelpfeiles 13, der in Richtung der Z-Achse der Senkerosionsanlage verläuft, hin- und herbewegt werden. Diese Bewegung ist die Vorschubbewegung während des Erodiervorgangs. Bei Bedarf können dieser Vorschubbewegungen auch noch Vorschubbewegungen in Richtung der X- und Y-Achse (beide nicht dargestellt) überlagert werden.

Das Werkstück 5 und die Elektrode 11 sind elektrisch mit einem Impulsgenerator 15 verbunden. Die elektrische Verbindung erfolgt über Leitungen 17 und 19.

Ein Regel- und Steuergerät 21 regelt die Vorschubbewegung der Elektrode 11 in Abhängigkeit von dem Strom, der durch die Leitungen 17 und 19 fließt und/oder in Abhängigkeit der Spannung zwischen den elektrischen Leitungen 17 und 19.

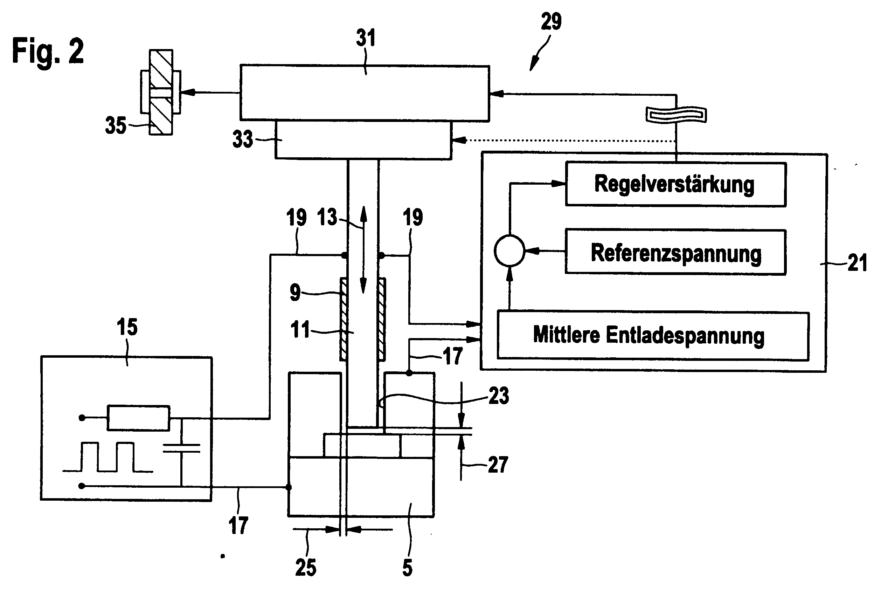

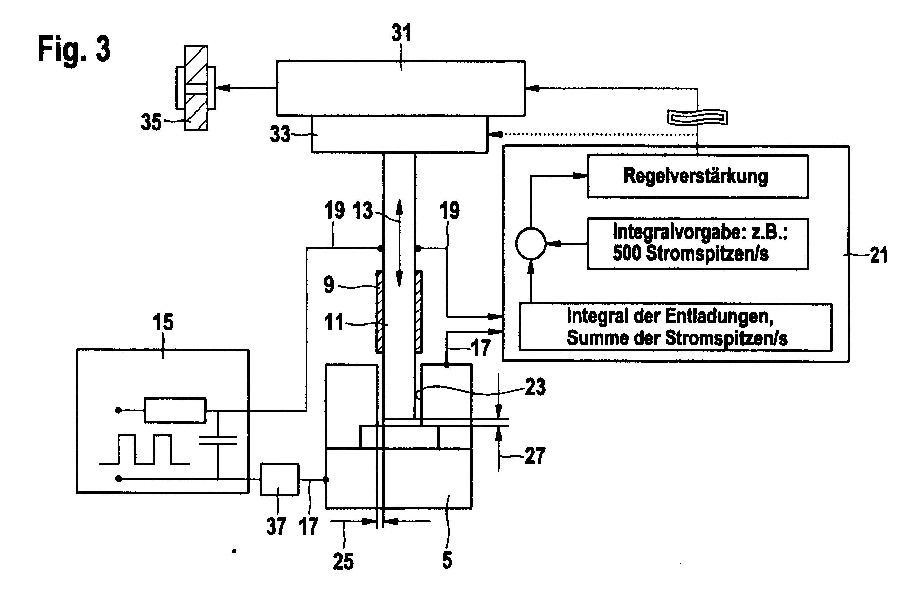

In den Figuren 2 und 3 sind Teile der in Figur 1 dargestellten Erodiermaschine dargestellt. In Figur 2 ist die Elektrode 11 schon ein Stück weit in das Werkstück 5 eingedrungen. Dies bedeutet, dass in dem Werkstück 5 bereits eine Bohrung 23 teilweise vorhanden ist. Der laterale Abstand zwischen Elektrode 11 und Bohrung 23 ist in Figur 2 mit dem Bezugszeichen 25 versehen. Die Erfindung ist selbstverständlich nicht auf das Einbringen einer Bohrung 23 in ein Werkstück 5 beschränkt, sondern kann beim Erodieren verschiedenster Geometrien mit Erfolg eingesetzt werden.

Der Spalt zwischen der Stirnseite der Elektrode 11 und dem Grund der Bohrung 23 ist in Figur 2 mit dem Bezugszeichen 27 versehen. Dieser Spalt wird auch nachfolgend als Stirnspalt bezeichnet.

Die Qualität der Bohrung 23 hängt in erheblichem Maße von dem Stirnspalt 27 ab. Da der Stirnspalt 27 wiederum von der elektrischen Leistung, die der Impulsgenerator 15 auf Elektrode 11 und Werkstück 5 überträgt sowie der Vorschubgeschwindigkeit der Elektrode 11 abhängt, wird die Vorschubgeschwindigkeit durch das Regel- und Steuergerät 21 unter anderem in Abhängigkeit dieser Größen gesteuert. Zu diesem Zweck steuert das Regel- und Steuergerät 21 die Vorschubeinrichtung 29 der Erodiermaschine an. Die Vorschubeinrichtung 29 besteht aus einem Hauptantrieb 31 und einem Piezoaktor 33, der die Funktion eines Feinantriebs übernimmt.

Der Hauptantrieb 31 und der Piezoaktor 33 sind nur als "Black Boxes" dargestellt. Als Hauptantrieb 31 kann eine aus dem Stand der Technik bekannte Kugelgewindespindel, die in sich vorgespannt ist, mit einem Gleichstrommotor eingesetzt werden. Ein solcher Antrieb ist jedem Fachmann auf dem Gebiet des Werkzeugmaschinenbaus bekannt und muss deshalb im Zusammenhang mit der Erfindung nicht näher erläutert werden. Zwischen dem Spindelantrieb und der Kugelgewindespindel (nicht dargestellt) ist eine schaltbare Magnetkupplung 35 vorgesehen. Auch die schaltbare Magnetkupplung 35 ist in Figur 2 nur stilisiert dargestellt.

Um die Elektrode 11 ausgehend von einer Ausgangsposition (nicht dargestellt) in die Nähe des Werkstücks 5 zu bringen, steuert das Regel- und Steuergerät 21 den Hauptantrieb 31 so lange an, bis es aufgrund der Nähe und wegen der vom Impulsgenerator 15 erzeugten elektrischen Spannung zwischen Elektrode 11 und Werkstück 5 zu einer Funkenbildung zwischen Elektrode 11 und Werkstück 5 kommt. Dann in diesem Moment wird der Hauptantrieb 31 gestoppt und die Magnetkupplung 35 geöffnet, so dass die Kugelgewindespindel (nicht dargestellt) und der Antrieb der Spindel entkoppelt sind. Gleichzeitig wird die Kugelgewindespindel durch eine nicht dargestellte Arretiervorrichtung geklemmt, so dass der Hauptantrieb 31 keine Vorschubbewegung der Elektrode 11 mehr ausführen kann.

Die weitere Vorschubbewegung der Elektrode 11 zum Herstellen der Bohrung 23 wird durch den Piezoaktor 33 ausgeführt. Auch der Piezoaktor 33 wird von dem Regel- und Steuergerät 21 angesteuert.

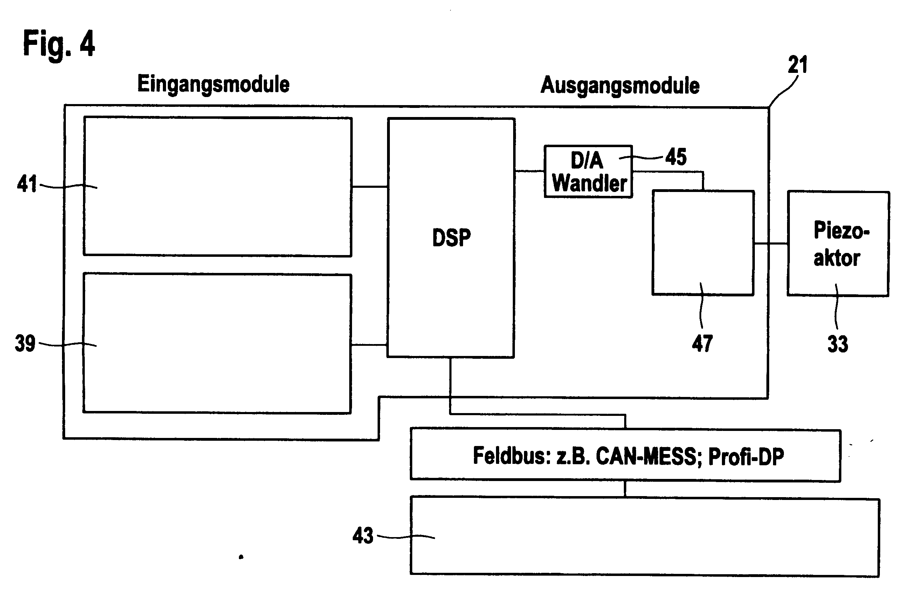

Bei dem Ausführungsbeispiel gemäß Figur 2 wird die mittlere Entladespannung durch Abgriff an den Leitungen 17 und 19 ermittelt und mit einer Referenzspannung verglichen. Durch den Vergleich der gemessenen mittleren Entladespannung und der Referenzspannung wird eine Regelverstärkung bestimmt und der Piezoaktor 33 angesteuert. Die Art der Ansteuerung wird nachfolgend im Zusammenhang mit der Figur 4 noch näher erläutert werden.

In Figur 3 ist ein weiteres Ausführungsbeispiel einer erfindungsgemäßen Erodiervorrichtung dargestellt. Dieses Ausführungsbeispiel weist große Übereinstimmungen mit dem anhand der Figur 2 beschriebenen Ausführungsbeispiel auf, so dass nachfolgend nur die Unterschiede erläutert werden. Der wesentliche Unterschied der genannten Ausführungsbeispiele besteht in der Art der Vorschubregelung. Bei dem Ausführungsbeispiel gemäß Figur 3 wird das Integral der Entladungen elektrischer Energie zwischen Elektrode 11 und Werkstück 5 gebildet. Alternativ kann auch die Summe der Stromspitzen pro Sekunde des zwischen Elektrode 11 und Werkstück 5 fließenden Stroms gebildet werden. Diese Istwerte werden mit einem Sollwert, wie zum Beispiel 500 Stromspitzen pro Sekunde, verglichen. Um die Summe der Stromspitzen, oder das Integral der Entladungen des zwischen der Elektrode 11 und dem Werkstück 5 besser messen zu können ist in der Leitung 17 ein Shuntwiderstand 37 vorgesehen.

Aus der Differenz des Istwerts mit dem Sollwert wird eine Regelabweichung gebildet, die in eine Regelverstärkung umgesetzt wird, mit der wiederum entweder der Hauptantrieb 31 oder der Feinantrieb 33 angesteuert wird.

Der Hauptantrieb 31 wird so lange angesteuert, wie der Abstand zwischen Elektrode 11 und Werkstück 5 relativ groß ist. Wegen des großen Abstandes finden keine Entladungen zwischen Elektrode 11 und Werkstück 5 statt. Sobald sich die Elektrode 11 so weit an das Werkstück 5 angenähert hat, dass eine Entladung stattfindet, wird der Hauptantrieb 31 abgeschaltet, die Magnetkupplung 35 geöffnet und der Spindelantrieb des Hauptantriebs 31 arretiert. Anschließend wird die weitere Vorschubbewegung durch den Piezoaktor 33 ausgeführt. Der Piezoaktor 33 wird von dem Steuer- und Regelgerät 21 in der zuvor beschriebenen Weise angesteuert.

In Figur 4 wird die Ansteuerung des Piezoaktors 33 durch das Steuer- und Regelgerät 21 etwas näher erläutert. Das Steuer- und Regelgerät 21 hat zwei Eingangsmodule 39 und 41. In dem ersten Eingangsmodul 39 wird der im Zusammenhang mit der Figur 2 beschriebene Vergleich der gemessenen mittleren Entladespannung mit dem Sollwert und der Referenzspannung durchgeführt. Die daraus gebildete Regeldifferenz wird an einen digitalen Signalprozessor DSP weitergegeben.

In dem zweiten Eingangsmodul 41 wird das anhand der Figur 3 beschriebene Verfahren der Integralbildung der Strompeaks pro Sekunde oder der Summe der Stromspitzen pro Sekunde mit Hilfe des Shuntwiderstands 37 durchgeführt. Auch im zweiten Eingangsmodul wird eine Regeldifferenz gebildet und an den digitalen Signalprozessor DSP weitergegeben. Der digitale Signalprozessor DSP kann über einen Feldbus, wie zum Beispiel CAN-Mess oder Profi-DP, mit einer übergeordneten Steuerung 43 verbunden sein.

Der digitale Signalprozessor DSP gibt seine Ausgangssignale an einen D/A-Wandler 45 weiter, der eine Leistungsendstufe 47 ansteuert. Mit Hilfe dieser Leistungsendstufe 47 wird der Piezoaktor 33 angesteuert.

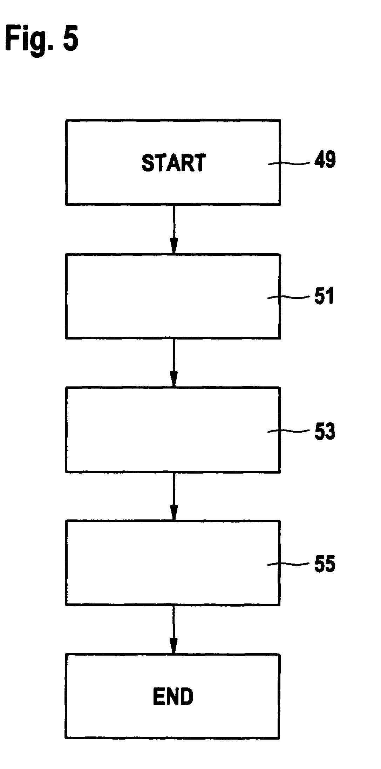

In der Figur 5 ist der Ablauf des erfindungsgemäßen Verfahrens in Form eines Ablaufdiagramms dargestellt. In einem Startblock 49 startet das Verfahren. In einem ersten Schritt 51 wird die Elektrode 11 an das Werkstück 5 mit Hilfe des Hauptantriebs 31 bewegt.

Sobald es zu einer elektrischen Entladung zwischen Elektrode 11 und Werkstück 5 kommt, stoppt das Regel- und Steuergerät 21 den Hauptantrieb 31 und arretiert diesen. Außerdem wird die Magnetkupplung 35 geöffnet.

In einem weiteren Block 53 wird anschließend die Vorschubbewegung der Elektrode 11 durch den Feinantrieb 33 ausgeführt. Die Vorschubgeschwindigkeit während des Erodiervorgangs wird durch die anhand der Figuren 2 bis 4 beschriebene Regelung des Stirnspalts 27 von dem Regel- und Steuergerät 21 vorgenommen.

Sobald die Elektrode 11 ihre Endposition erreicht hat, das heißt die Bohrung 23 ist fertiggestellt, fahren sowohl der Feinantrieb 31 als auch der Hauptantrieb 31 in ihre Ausgangspositionen (nicht dargestellt) zurück, so dass das Werkstück 5 aus der Erodiermaschine entnommen werden kann. Damit ist das Verfahren beendet und die Bearbeitung eines weiteren Werkstücks kann erfolgen.

## Patentansprüche

1. Vorrichtung zum Erodieren, mit einer Elektrode (11), mit einem Elektrodenhalter (9) und mit einer Vorschubeinrichtung für die Elektrode (11), wobei die Vorschubeinrichtung einen Hauptantrieb (31) und einen Feinantrieb (33) umfasst, **dadurch gekennzeichnet, dass** eine schaltbare Arretiereinrichtung für den Hauptantrieb (31) vorhanden ist, so dass bei aktiviertem Feinantrieb (33) der Hauptantrieb (31) arretiert werden kann.

2. Vorrichtung nach Anspruch 1, **dadurch gekennzeichnet, dass** der Hauptantrieb (31) ein vorgespanntes Kugelgewinde aufweist.

3. Vorrichtung nach Anspruch 1 oder 2, **dadurch gekennzeichnet, dass** der Feinantrieb (33) einen Piezoaktor aufweist.

4. Vorrichtung nach Anspruch 3, **dadurch gekennzeichnet, dass** der Feinantrieb (33) durch eine Leistungsendstufe (47) und einen digitalen Signalprozessor (DSP) angesteuert wird.

5. Vorrichtung nach einem der vorhergehenden Ansprüche, **dadurch gekennzeichnet, dass** zwischen Hauptantrieb (31) und Elektrode (11) eine schaltbare Kupplung, insbesondere eine schaltbare Magnetkupplung (35), vorgesehen ist.

6. Vorrichtung nach einem der vorhergehenden Ansprüche, **dadurch gekennzeichnet, dass** ein Steuer- und Regelgerät (21) für den Hauptantrieb (31) und den Feinantrieb (33) vorgesehen ist, und dass das Steuer- und Regelgerät (21) den Vorschub der Elektrode (11) in Abhängigkeit der Entladespannung und/oder des Entladestroms zwischen einem zu bearbeitenden Werkstück (5) und einem Impulsgenerator (15) regelt.

7. Verfahren zum Erodieren **gekennzeichnet durch** folgende Verfahrensschritte:
- Anfahren einer Elektrode (11) an ein Werkstück (5) mit einem Hauptantrieb (31),
- Abschalten des Hauptantriebs (31),
- Ausführen der Vorschubbewegung der Elektrode (11) während des Erodiervorgangs **durch** den Feinantrieb (33) und
- Arretieren des Hauptantriebs (31) nach dem Abschalten durch eine Arretiervorrichtung.

8. Verfahren nach Anspruch 7, **dadurch gekennzeichnet, dass** die Vorschubbewegung in Abhängigkeit der Entladespannung und/oder des Entladestroms zwischen einem zu bearbeitenden Werkstück (5) und dem Impulsgenerator (15) geregelt wird.

9. Verfahren nach Anspruch 7 oder 8, **dadurch gekennzeichnet, dass** nach dem Erodiervorgang die Arretiervorrichtung gelöst wird, die schaltbare Kupplung (35) geschlossen wird, und dass sowohl Hauptantrieb (31) als auch Feinantrieb (33) in ihre Ausgangspositionen gebracht werden.

## Claims

1. Electro-erosion apparatus, with an electrode (11), with an electrode holder (9) and with an advancing device for the electrode (11), the advancing device comprising a main drive (31) and a vernier drive (33), **characterized in that** there is a switchable arresting device for the main drive (31), so that, when the vernier drive (33) is activated, the main drive (31) can be arrested.

2. Apparatus according to Claim 1, **characterized in that** the main drive (31) has a pretensioned ball screw.

3. Apparatus according to Claim 1 or 2, **characterized in that** the vernier drive (33) has a piezo actuator.

4. Apparatus according to Claim 3, **characterized in that** the vernier drive (33) is driven by a power output stage (47) and a digital signal processor (DSP).

5. Apparatus according to one of the preceding claims, **characterized in that** a switchable coupling, in particular a switchable magnetic coupling (35), is provided between the main drive (31) and the electrode (11).

6. Apparatus according to one of the preceding claims, **characterized in that** an open-loop and closed-loop control device (21) is provided for the main drive (31) and the vernier drive (33), and **in that** the open-loop and closed-loop control device (21) controls the advancement of the electrode (11) in dependence on the discharge voltage and/or the discharge current between a workpiece (5) to be worked and a pulse generator (15).

7. Electro-erosion method, **characterized by** the following method steps:
- bringing an electrode (11) up to a workpiece (5) with a main drive (31),
- switching off the main drive (31),
- performing the advancing movement of the electrode (11) by the vernier drive (33) during the electro-erosion process and
- arresting the main drive (31) by an arresting device after it has been switched off.

8. Method according to Claim 7, **characterized in that** the advancing movement is controlled in dependence on the discharge voltage and/or the discharge current between a workpiece (5) to be worked and the pulse generator (15).

9. Method according to Claim 7 or 8, **characterized in that**, after the electro-erosion process, the arresting device is released, the switchable coupling (35) is closed and both the main drive (31) and the vernier drive (33) are brought into their starting positions.

## Revendications

1. Dispositif d'érosion doté d'une électrode (11), d'un support d'électrode (9) et d'un dispositif d'avancement de l'électrode (11), le dispositif d'avancement comprenant un entraînement principal (31) et un entraînement fin (33),
**caractérisé en ce que**
un dispositif commutable de blocage de l'entraînement principal (31) est prévu de telle sorte que l'entraînement principal (31) puisse être bloqué lorsque l'entraînement fin (33) est activé.

2. Dispositif selon la revendication 1, **caractérisé en ce que** l'entraînement principal (31) présente un filet à bille précontraint.

3. Dispositif selon les revendications 1 ou 2, **caractérisé en ce que** l'entraînement fin (33) présente un piézoactionneur.

4. Dispositif selon la revendication 3, **caractérisé en ce que** l'entraînement fin (33) est commandé par un étage final de puissance (47) et un processeur numérique de signaux (DSP).

5. Dispositif selon l'une des revendications précédentes, **caractérisé en ce qu'**un accouplement commutable, en particulier un accouplement magnétique commutable (35), est prévu entre l'entraînement principal (31) et l'électrode (11).

6. Dispositif selon l'une des revendications précédentes, **caractérisé en ce qu'**un appareil (21) de commande et de régulation de l'entraînement principal (31) et de l'entraînement fin (33) est prévu et **en ce que** l'appareil (21) de commande et de régulation régule l'avancement de l'électrode (11) en fonction de la tension de décharge et/ou du courant de décharge entre une pièce (5) à traiter et un générateur d'impulsions (15).

7. Procédé d'érosion, **caractérisé par** les étapes de procédé suivantes :
- approcher une électrode (11) d'une pièce (5) à l'aide d'un entraînement principal (31),
- débrancher l'entraînement principal (31),
- faire exécuter par l'entraînement fin (33) le déplacement d'avancement de l'électrode (11) pendant l'opération d'érosion et
- bloquer par un dispositif de blocage l'entraînement principal (31) après le débranchement.

8. Procédé selon la revendication 7, **caractérisé en ce que** le déplacement d'avancement est régulé en fonction de la tension de décharge et/ou du courant de décharge entre une pièce (5) à traiter et le générateur d'impulsions (15).

9. Procédé selon les revendications 7 ou 8, **caractérisé en ce qu'**après l'opération d'érosion, le dispositif de blocage est libéré, l'accouplement commutable (35) est fermé et **en ce que** tant l'entraînement principal (31) que l'entraînement fin (33) sont ramenés dans leur position initiale.
